# EUROPEAN PATENT APPLICATION

(11) **EP 4 461 850 A1**
(43) Date of publication of application: **13.11.2024**
(21) Application number: 23172741.3
(22) Date of filing: 11.05.2023
(51) Int. Cl.: C25B 1/04, B01J 37/34, C25B 11/052, C25B 11/061, C25B 11/063, C25B 11/077, C25B 11/091, C25D 13/02, H01M 8/08

(54) **NICKEL MOLYBDENUM CATALYSTS AND THEIR METHODS OF PREPARATION**

(71) Applicant: Ecole Polytechnique Fédérale de Lausanne (EPFL), 1015 Lausanne (CH)
(72) Inventor: Serban, Ariana, 1015 LAUSANNE (CH); Hu, Xile, 1015 LAUSANNE (CH)
(74) Representative: Schulz Junghans Patentanwälte PartGmbB

(57) **Abstract**

The present invention relates to method for the synthesis of a transition metal catalyst consisting of electrodeposition on a substrate electrode from an electrolyte solution comprising at least one transition metal precursor, wherein the electrodeposition takes places at a deposition current density of 500 to 2000 mA/cm².

The present invention further relates to a transition metal catalyst characterised in that it is stable for at least 30 minutes at a current density of at least 400 mA/cm² on the substrate electrode.

## Description

### Background

For the production of carbon-neutral hydrogen (H₂) gas and oxygen (O₂) from water, typically, two half-reactions, the cathodic hydrogen evolution reaction (HER) and the anodic oxygen evolution reaction (OER) take place. Efficient catalysts for the HER are necessary for the water electrolyzer to operate at high energy efficiencies. Long-term stability, good electrochemical performance, strong mechanical properties, minimal manufacturing costs, and scalability are the primary criteria of hydrogen evolution reaction catalysts. Currently, platinum group metal-based catalysts have the best HER catalytic activity, but their scarcity and high cost prevent them from being used on a broad scale. A significant number of prospective catalysts have been prepared and investigated in recent years. However, most are still inadequate in term of activity and stability and/or need preparation methods that are mostly multiple-step, require sophisticated instrumentations and procedures, and are time-consuming, thus often costly and hard to produce.

Several catalysts were grown in situ on diverse metallic substrate electrodes such as Ni, Co, and Fe foams as well as stainless steel mesh. Such catalysts can deliver a high current density with relatively low overpotentials at 1 A/cm², however, their synthesis involves a multi-steps.

Previously reported NiMo catalysts have a low energy efficiency and low stability for the hydrogen evolution reaction at high current densities, which are the necessary operating conditions for water electrolyzers. Publications include the synthesis of nickel molybdenum catalysts on waste stainless steel wires recovered from worn-out tires by thermal methods which however give low current densities of 500 mA/cm² [1]. Other references report electrodeposition methods for the synthesis of nickel molybdenum catalysts using a basic deposition bath containing potassium pyrophosphate and sodium bicarbonate and low cathodic currents for deposition [2] or in an electrolyte solution containing H₃BO₃, C₆H₅Na₃O₇·2H₂O, Ni(NO₃)₂, and H₃PO₄·12MoO₃ with a weakly acidic pH of 5.7 [3]. These methods, however, need an overpotential of ca. 0.64V vs. RHE (reversible hydrogen electrode) to reach 1 A/cm² and show rapid catalyst degradation after a few minutes or use small current densities leading to poorly active catalysts wherein the use of higher current densities leads to the deposition of inactive solids. The use of H₃BO₃, particularly in combination with sodium citrate in Zhao et al., led to significant enhancement of the catalytic activity and its concentration significantly affected the deposition of the nickel-molybdenum coating on the substrate electrode. While in the absence of H₃BO₃ the deposited coating was found to be cracked with many crevices up to the coating peeling off from the substrate electrode leading to poor catalysts. With increasing H₃BO₃ concentration, the coating becomes more compact and bonded more tightly with the substrate electrode. It was further found that H₃BO₃ can suppress the electroreduction of molybdenum leading to less deposition of molybdenum precursor.

Based on the above-mentioned state of the art, the objective of the present invention is to provide means and methods to produce highly active and stable nickel molybdenum catalysts at high current densities using a cost effective and scalable synthesis method. This objective is attained by the subject-matter of the independent claims of the present specification, with further advantageous embodiments described in the dependent claims, examples, figures and general description of this specification.

### Summary of the Invention

A first aspect of the invention relates to a method for the synthesis of a transition metal catalyst consisting of electrodeposition on a substrate electrode from an electrolyte solution comprising at least one transition metal precursor, wherein the electrodeposition takes places at a deposition current density of 500 to 2000 mA/cm².

A second aspect of the invention relates to a transition metal catalyst obtained by the method according to the first aspect of the invention, wherein the transition metal catalyst is characterised in that it is stable for at least 30 minutes at a current density of at least 400 A/cm² on the substrate electrode, particularly wherein the transition metal catalyst is characterised in that it is stable for at least 30 minutes at a current density of 1000 mA/cm² on the substrate electrode.

### Terms and definitions

For purposes of interpreting this specification, the following definitions will apply and whenever appropriate, terms used in the singular will also include the plural and vice versa. In the event that any definition set forth below conflicts with any document incorporated herein by reference, the definition set forth shall control.

The terms "comprising", "having", "containing", and "including", and other similar forms, and grammatical equivalents thereof, as used herein, are intended to be equivalent in meaning and to be open-ended in that an item or items following any one of these words is not meant to be an exhaustive listing of such item or items, or meant to be limited to only the listed item or items. For example, an article "comprising" components A, B, and C can consist of (i.e., contain only) components A, B, and C, or can contain not only components A, B, and C but also one or more other components. As such, it is intended and understood that "comprises" and similar forms thereof, and grammatical equivalents thereof, include disclosure of embodiments of "consisting essentially of" or "consisting of."

Where a range of values is provided, it is understood that each intervening value, to the tenth of the unit of the lower limit, unless the context clearly dictates otherwise, between the upper and lower limit of that range and any other stated or intervening value in that stated range, is encompassed within the disclosure, subject to any specifically excluded limit in the stated range. Where the stated range includes one or both of the limits, ranges excluding either or both of those included limits are also included in the disclosure.

Reference to "about" a value or parameter herein includes (and describes) variations that are directed to that value or parameter per se. For example, description referring to "about X" includes description of "X."

As used herein, including in the appended claims, the singular forms "a", "or" and "the" include plural referents unless the context clearly dictates otherwise.

"And/or" where used herein is to be taken as specific recitation of each of the two specified features or components with or without the other. Thus, the term "and/or" as used in a phrase such as "A and/or B" herein is intended to include "A and B," "A or B," "A" (alone), and "B" (alone). Likewise, the term "and/or" as used in a phrase such as "A, B, and/or C" is intended to encompass each of the following aspects: A, B, and C; A, B, or C; A or C; A or B; B or C; A and C; A and B; B and C; A (alone); B (alone); and C (alone).

Unless defined otherwise, all technical and scientific terms used herein have the same meaning as commonly understood by one of ordinary skill in the art (e.g., in cell culture, molecular genetics, nucleic acid chemistry, hybridization techniques and biochemistry, organic synthesis).

The term *electrodeposition* in the context of the present specification relates to an electrochemical process that allows the preparation of solid deposits on the surface of conductive materials.

The term *substrate electrode* in the context of the present specification relates to a conductive material at which electrodeposition can occur, and which may be further characterised in having a high conductivity and may further be characterised in being robust, have mechanical strength, , is gas permeable and being stable in acidic and alkaline solutions. Non limiting examples of substrate electrodes are nickel mesh, iron mensh, copper mesh, stainless steel mesh, titanium mesh, aluminium mesh, titanium paper, stainless steel paper, nickel paper, iron paper, carbon paper, aluminium foam, cobalt foam, graphene foam, nickel foam, carbon foam, iron foam, and titanium foam.

The term *precursor* in the context of the present specification relates to a compound that participates in a chemical reaction that produces another compound.

Any patent document cited herein shall be deemed incorporated by reference herein in its entirety.

### Detailed Description of the Invention

A first aspect of the invention relates to a method for the synthesis of a transition metal catalyst consisting of electrodeposition on a substrate electrode from an electrolyte solution comprising at least one transition metal precursor, wherein the electrodeposition takes places at a deposition current density of 500 to 2000 mA/cm².

The method corresponds to a one step synthesis under acidic conditions and high cathodic current densities, which leads to catalysts with improved activity and stability. The catalysts can be used in hydrogen evolution reaction (HER) or hydrogen oxidation reaction (HOR). Due to its one step only, the synthesis is cost effective and can be used at any scale.

The electrolyte solution has a pH between 4.4 and 4.9 prior to electrodeposition due to high concentrations of the present electrolytes and transition metal precursors.

In certain embodiments, the electrolyte solution may further comprise electrolytes added to the solution.

In certain embodiments, electrolytes in the electrolyte solution are chosen so that the conductivity of the electrolyte solution is 1 to 1000 mS/cm.ln certain embodiments, electrolytes in the electrolyte solution are chosen so that the conductivity of the electrolyte solution is 100 to 1000 mS/cm.

In certain embodiments, electrolytes in the electrolyte solution are chosen so that the conductivity of the electrolyte solution is at least 100 to 700 mS/cm.

In certain embodiments, electrolytes in the electrolyte solution are chosen so that the conductivity of the electrolyte solution is at least 100 to 400 mS/cm.

The conductivity of the electrolyte solution can significantly affect the electrodeposition process. Higher conductivity leads to a greater flow of current and faster deposition rates. Additionally, more conductive solutions can help to reduce the likelihood of unwanted side reactions or unwanted reactions on the electrode surface.

However, the conductivity can vary depending on the specific application and the desired deposition rate.

In certain embodiments, the electrolyte solution comprises electrolytes, wherein at least one is selected from the group consisting of K⁺, Na⁺, NH₄²⁺, SO₄²⁻, NO₃⁻, CO₃²⁻, NH₂ SO₃⁻, NH₄⁺ and Cl⁻.

In certain embodiments, the electrolytes solution comprises further electrolytes, wherein at least one is selected from the group consisting of NH₄⁺ and Cl⁻.

In certain embodiments, the electrolytes solution comprises further electrolytes, wherein the electrolytes added to the electrolyte solution consist of NH₄⁺ and Cl⁻.

Chloride ions can act as a leavening agent, which improves the surface morphology of the deposited metal, particularly nickel, and which reduces the formation of roughness or defects on the surface.

In certain embodiments, the transition metal of the at least one transition metal precursor is selected from nickel, molybdenum, cobalt, and iron, wherein in case of the transition metal of one of the at least one transition metal precursor being molybdenum at least one other transition metal precursor is used.

Transition metal precursor combinations which can be used in electrodeposition involve nickel, molybdenum and cobalt; nickel and cobalt; nickel, molybdenum and iron; molybdenum and cobalt; molybdenum and iron. Single transition metal precursors that can be used in electrodeposition without a second transition metal precursor involve nickel, cobalt or iron precursors.

In certain embodiments, two or more transition metal precursor are used, which are selected from a nickel precursor, a molybdenum precursor, a cobalt precursor, and an iron precursor, particularly one of the two or more transition metal precursor is a nickel precursor.

In certain embodiments, a molybdenum precursor and a nickel precursor are used as transition metal precursors.

In certain embodiments, the at least one transition metal precursor are selected from transition metal oxides, transition metal sulphates, transition metal halogens and transition metal nitrates.

In certain embodiments, the at least one transition precursor are transition metal salts selected from transition metal oxides and transition metal halogens.

In certain embodiments, the molybdenum precursor is selected from a molybdenum oxide.

In certain embodiments, the molybdenum precursor is selected from (NH₄)₆Mo₇O₂₄, Na₂MoO₄ and K₂MoO₄.

In certain embodiments, the molybdenum precursor is selected from (NH₄)₆Mo₇O₂₄·4H₂O.

In certain embodiments, the nickel precursor, the iron precursor and/or the cobalt precursor are independently from each other selected from MClₓ, M(NO₃)ₓ and MSO₄, wherein M is selected from iron, cobalt and nickel and x corresponds to the oxidation state of the corresponding metal.

In certain embodiments, the nickel precursor, the iron precursor and/or the cobalt precursor are selected from MClₓ wherein M is selected from iron, cobalt and nickel and x corresponds to the oxidation state of the corresponding metal.

In certain embodiments, M of MClₓ is nickel.

In certain embodiments, x is 2 or 3.

In certain embodiments, the nickel precursor is selected from NiCl₂, Ni(NO₃)₂ and NiSO₄.

In certain embodiments, the nickel precursor is from NiCl₂.

In certain embodiments, the molar ratio of the nickel precursor to any transition metal precursor other than a cobalt precursor is 1:2000 to 1:350, particularly 1:2000 to 1:500, more particularly 1:2000 to 1:1000, wherein in case a cobalt precursor is used, the molar ratio of the nickel precursor to the cobalt precursor is 1:1 to 1:1.5.

The standard electrode potential for the reduction of nickel ions to metallic nickel is -0.25 V, while the standard electrode potential for iron reduction to metallic iron is -0.44 V. Molybdenum and cobalt have reduction potentials of -0.16 V and -0.28 V, respectively.

In certain embodiments, the molar ratio of the nickel precursor to any other transition metal precursor, in particular molybdenum precursor and iron precursor, more particularly molybdenum precursor is 1:2000 to 1:350.

In certain embodiments, the molar ratio of the nickel precursor to another transition metal precursor, in particular molybdenum precursor and iron precursor, more particularly molybdenum precursor, is 1:2000 to 1:500.

In certain embodiments, the molar ratio of the nickel precursor to another transition metal precursor, in particular molybdenum precursor and iron precursor, more particularly molybdenum precursor, is 1:2000 to 1:1000.

In certain embodiments, the molar ratio of the nickel precursor to another transition metal precursor, in particular molybdenum precursor and iron precursor, more particularly molybdenum precursor, is 1:1000.

The ratio between the metal precursors can significantly impact the performance of the resulting catalyst in the hydrogen evolution reaction (HER). However, the optimal ratio can depend on various factors, such as the specific application, the synthesis method, and the conditions of the HER reaction. A ratio of 1:1000 of the nickel precursor to molybdenum precursor led to a catalyst with best electrochemical performance in the present invention.

In certain embodiments, the substrate electrode is selected from nickel mesh, iron mesh, copper mesh, stainless steel mesh, titanium mesh, aluminium mesh, titanium paper, stainless steel paper, nickel paper, iron paper, carbon paper, aluminium foam, cobalt foam, graphene foam, nickel foam, carbon foam, iron foam, and titanium foam.

In certain embodiments, the substrate electrode is selected from nickel mesh, nickel foam, nickel paper, stainless steel paper and carbon paper.

In certain embodiments, the substrate electrode is selected from carbon paper, nickel paper and stainless steel paper and nickel foam.

In certain embodiments, the substrate electrode is selected from nickel paper and carbon paper.

In certain embodiments, the deposition current density is between 800 and 1700 mA/cm².

In certain embodiments, the deposition current density is between 1000 and 1600 mA/cm².

In certain embodiments, the deposition current density is between 1300 and 1500 mA/cm².

High current density electrodeposition, which involves depositing metal ions onto a substrate using a high rate of electrical current, can offer several advantages over traditional electrodeposition processes at lower current densities.

Firstly, high current density electrodeposition can result in faster deposition rates, which can be important for industrial processes where high throughput is desired. This can lead to reduced production times and increased efficiency.

Secondly, high current density electrodeposition can result in a more uniform and compact coating, as the high current density can promote the filling of voids and the levelling of surface irregularities. This can result in improved surface quality and greater coating thickness consistency.

Finally, high current density electrodeposition can result in improved mechanical properties of the deposited metal, such as increased hardness, strength, and wear resistance. This is due to the denser, more compact structure of the coating produced by the high current density.

The time required for electrodeposition is directly correlated to the catalyst loading.

In certain embodiments, the electrodeposition is performed for a deposition time of 500 to 2000 s.

In certain embodiments, the electrodeposition is performed for a deposition time of 800 and 1500 s.

In certain embodiments, the electrodeposition is performed for a deposition time of 1000 s. In certain embodiments, the method does not comprise the use of boric acid.

A second aspect of the invention relates to a transition metal catalyst obtained by the method according to the first aspect of the invention, wherein the transition metal catalyst is characterised in that it is stable for at least 30 minutes at a current density of at least 400 A/cm² on the substrate electrode, particularly wherein the transition metal catalyst is characterised in that it is stable for at least 30 minutes at a current density of 1000 mA/cm² on the substrate electrode.

In certain embodiments, the transition metal catalyst is characterised in that it is stable for up to 10 h at a current density of 1000 mA/cm² on the substrate electrode.

In certain embodiments, the transition metal catalyst is characterised in that it is stable for 10 h at a current density of 1000 mA/cm² on the substrate electrode.

In certain embodiments, the substrate electrode is selected from nickel mesh, iron mensh, copper mesh, stainless steel mesh, titanium mesh, aluminium mesh, titanium paper, stainless steel paper, nickel paper, iron paper, carbon paper, aluminium foam, cobalt foam, graphene foam, nickel foam, carbon foam, iron foam, and titanium foam.

In certain embodiments the substrate electrode is selected from nickel mesh, nickel foam, nickel paper, stainless steel paper and carbon paper, particularly the substrate electrode is selected from nickel paper and carbon paper.

In certain embodiments, the substrate electrode is selected from carbon paper, nickel paper and stainless steel paper and nickel foam.

In certain embodiments, the substrate electrode is selected from nickel paper and carbon paper.

The transition metal catalyst is stable upon air exposure and is active in a hydrogen oxygen reaction (HOR) and can thus be used for example as catalyst for anion exchange membrane fuel cells.

The invention is further illustrated by the following examples and figures, from which further embodiments and advantages can be drawn. These examples are meant to illustrate the invention but not to limit its scope.

### Description of the Figures

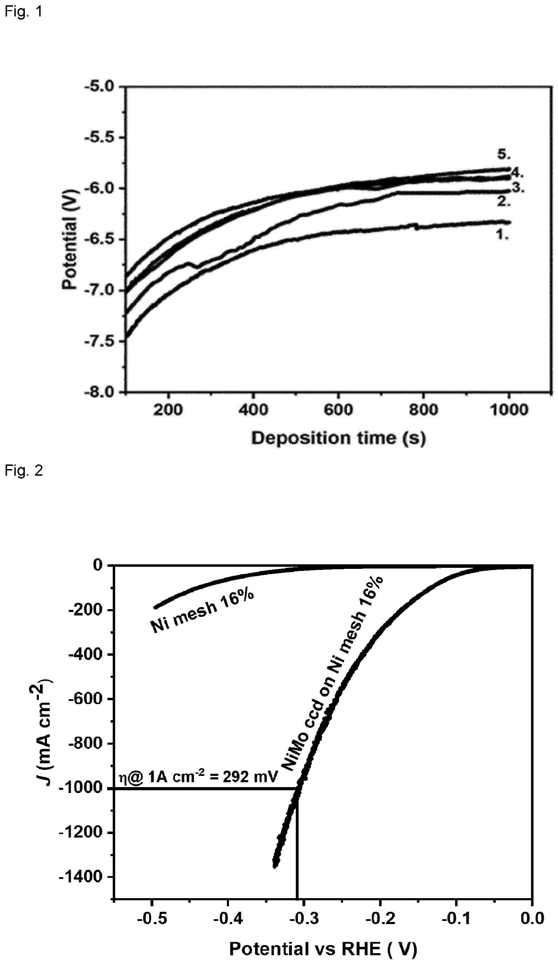

- Fig. 1: shows the potential during NiMo cathodic current deposition (ccd) on different substrate electrodes, including carbon paper (1), nickel mesh (2), nickel paper (3), stainless steel paper (4) and nickel foam (5).
- Fig. 2: shows the polarization curves of clean Ni mesh and NiMo catalyst on Ni mesh.

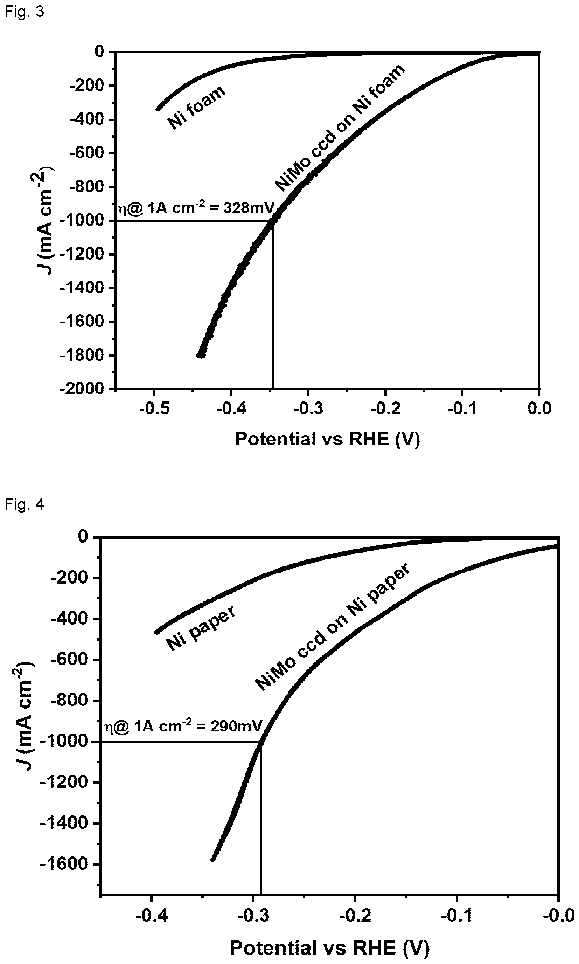

- Fig. 3: shows the Polarization curves of clean Ni foam and NiMo catalyst on Ni foam
- Fig. 4: shows the polarization curves of clean Ni paper and NiMo catalyst on Ni paper.

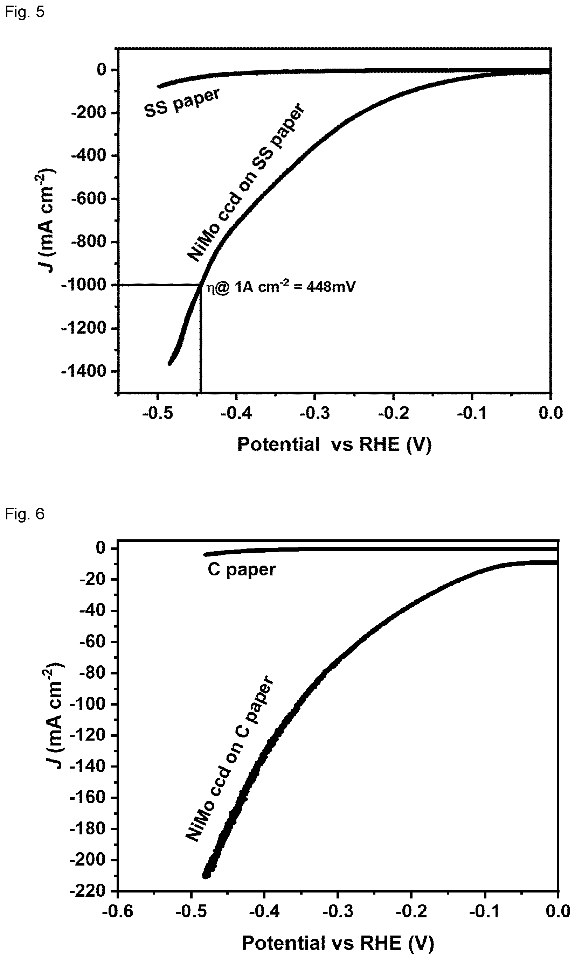

- Fig. 5: shows the polarization curves of clean Stainless steel (SS) paper and NiMo catalyst on SS paper.
- Fig. 6: shows the polarization curves of clean carbon (C) paper and NiMo catalyst on carbon (C) paper.

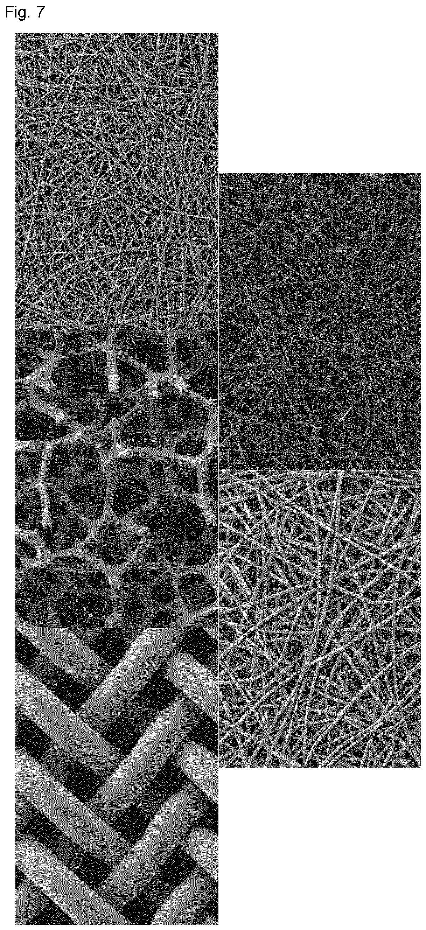

- Fig. 7: shows scanning electron microscope (SEM) images of Ni mesh (a); Ni foam (b); Ni paper (c); SS paper (d); C paper (e).

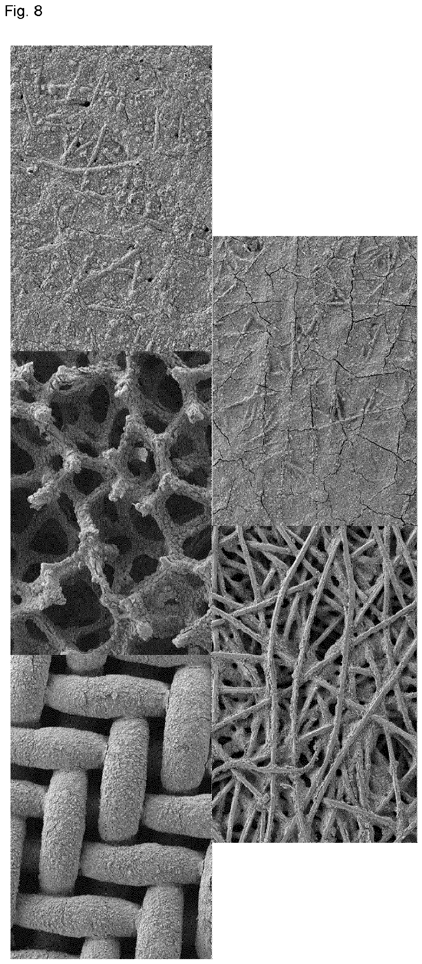

- Fig. 8: shows scanning electron microscope (SEM) images of the Nickel-Molybdenum catalysts on Ni mesh (a); Ni foam (b); Ni paper (c); SS paper (d); C paper (e).

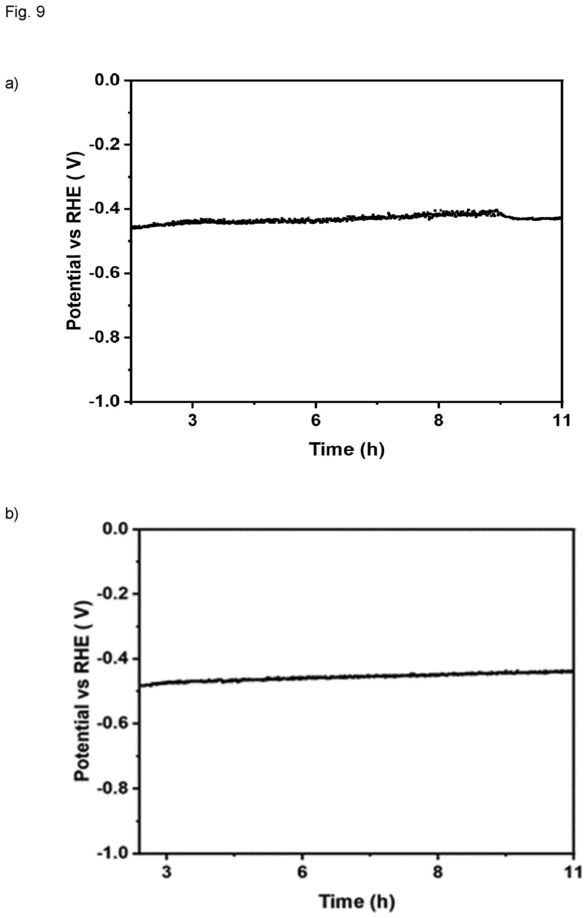

- Fig. 9: shows stability tests at -1 A cm⁻² on 10a-NiMo cathodic current deposition (ccd) on Ni paper and 10b: NiMo cathodic current deposition (ccd) on C paper.

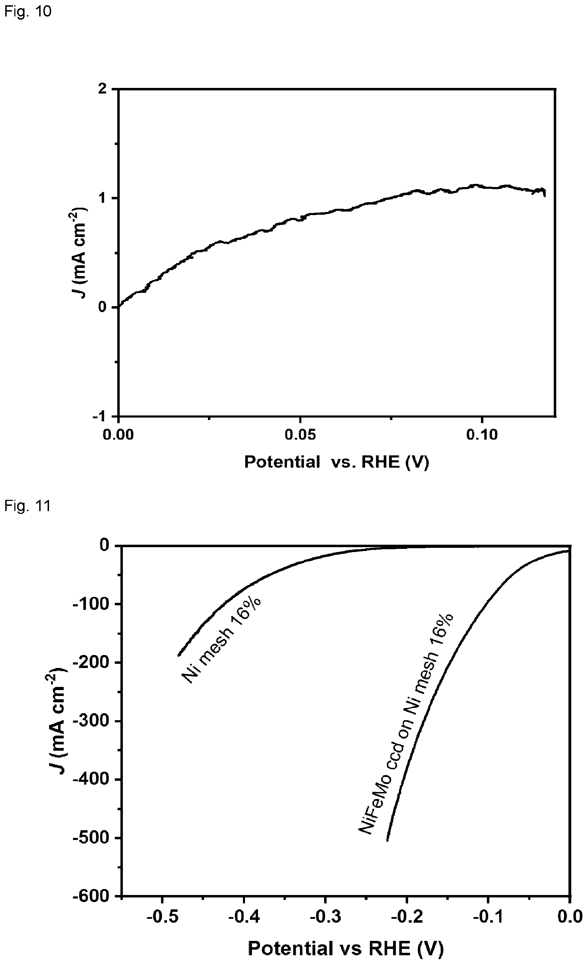

- Fig. 10: shows polarization curves of NiMo catalyst on Ni foam for hydrogen oxidation reaction (HOR).
- Fig. 11: shows the electrodeposition of NiFeMo at -1.5 A cm⁻² for 1000s on Ni mesh.

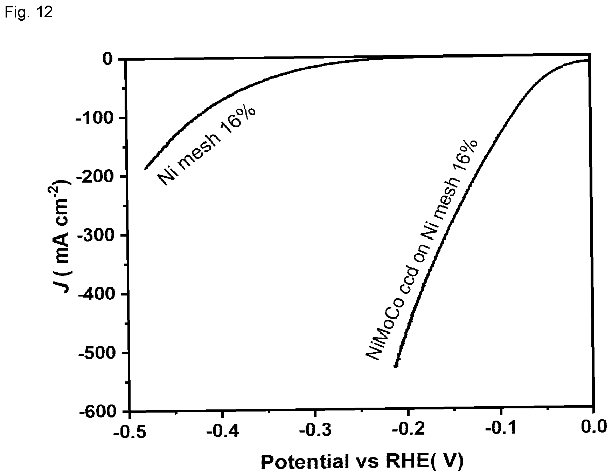

- Fig. 12: shows the electrodeposition of NiMoCo at -1.5 A cm⁻² for 1000s on Ni mesh.

### Examples

### Example 1: Preparation of the nickel-molybdenum catalyst

The electrodeposition is performed using a two-electrode configuration in a cell containing the precursors while being purged with N₂. The electrodes are set at a spacing of around 2-3 cm apart in the electrodeposition bath. The substrate electrodes were washed in 1 M HCl for 15 minutes in an ultrasonication bath, then ultrasound treated in acetone for 10 min and finally rinsed with distilled water. Working electrodes were pieces of clean Ni mesh, Ni foam, Ni paper, SS paper, and C paper (1 cm²), and the counter electrode was a carbon rod.

### The electrodeposition bath contained the following solutions (Table 1)

**Table 1: Compositions of the electroplating bath**

| Solution | Electrodeposition bath |
|---|---|
| S1 | 2.0 M NH₄Cl ; 0.1 M NiCl₂ and 5*10⁻⁵M (NH₄)₆Mo₇O₂₄ · 4 H₂O |
| S2 | 2.0 M NH₄Cl; 0.1 M NiCl₂ and 1*10⁻⁴ M (NH₄)₆Mo₇O₂₄ · 4 H₂O |
| S3 | 2.0 M NH₄Cl; 0.1 M NiCl₂ and 2*10⁻⁴ M (NH₄)₆Mo₇O₂₄ · 4 H₂O |
| S4 | 2.0 M NH₄Cl; 0.1 M NiCl₂ and 3*10⁻⁴ M (NH₄)₆Mo₇O₂₄ · 4 H₂O |

Solution S2 yielded a catalyst with the best electrochemical performance. Table 2 shows electrodeposition of the resulting catalyst on five different substrate electrodes at a current density of -1.5 A cm⁻², for a deposition time of 1000 s and different overpotentials depending on the substrate electrode.

**Table 2: Galvanostatic electrodeposition parameters: current deposition; bath composition, deposition time, overpotential of 1 A/cm² and catalyst loading on different substrate electrodes (Ni mesh, Ni foam, Ni paper, SS paper and C paper)**

| Substrate electrode | J_{d} (A cm⁻²) | Solution | Deposition time (s) | η@ -1A cm⁻² | Loading (mg cm⁻²) |
|---|---|---|---|---|---|
| Ni mesh | -1.5 | S2 | 1000 | 292 | 40-60 |
| Ni foam | -1.5 | S2 | 1000 | 328 | 65-85 |
| Ni paper | -1.5 | S2 | 1000 | 290 | 50-70 |
| SS paper | -1.5 | S2 | 1000 | 448 | 60-80 |
| C paper | -1.5 | S2 | 1000 | - | 35-55 |

### Example 2: Electrochemical characterisations

Electrochemical characterizations were carried out on a Gamry Reference 3000 electrochemical instrument using a three-electrode electrochemical system. 1M KOH solution was used as electrolyte, and an Ag/AgCI electrode with 3M KCI filling solution and carbon rod were used as a reference and counter electrode, respectively. E vs. RHE= E vs. Ag/AgCI+1.016. Ohmic drop correction was performed using the current interrupt (CI) method by the potentiostat. Linear sweep voltammetry (LSV) measurements were performed at a scan rate of 1mV s⁻¹ in the potential range -1 -1.6 V vs. Ag/AgCI.

### Example 3: Stability tests

Stability tests were performed in a 3-electrode configuration in a 1M KOH solution under N₂ purge. The reference electrode is an Ag/AgCI 3M, the counter electrode is a graphite rod and the working electrodes are the electrodeposited substrate electrodes. The stability tests were performed by applying 1000 mA cm⁻² for 10h with IR drop correction.

**Table 3: Performance comparison of catalysts of the present invention with catalysts of the prior art.**

| Catalyst | Overpotential at 1A cm⁻² (V) | Stability | |
|---|---|---|---|
| NiMo onto Ni expanded mesh 1 | 1.1 | 1000 s at *j*=-0.3 A cm⁻² | Prior art |
| NiMo onto Ni fly-net mesh 2 | 1.2 | 1000 s at *j*=-0.1 A cm⁻² | Prior art |
| Our NiMo on Ni paper | 0.29 | 10 h at *j*=-1 A cm⁻² | present invention |
| Our NiMo on C paper | | 10 h at *j*=-1 A cm⁻² | present invention |

The catalyst of the present invention has an increased stability duration of up to 10 h compared to about 16 minutes in the prior art, at a current density that is ten times higher than in the prior art.

### Example 4: Electrodeposition of NiFeMo and NiMoCo catalysts

The electrodeposition is performed using a two-electrode configuration in a cell containing the precursors while being purged with N₂. The electrodes are set at a spacing of around 2-3 cm apart in the electrodeposition bath. The substrate electrodes were washed in 1 M HCl for 15 minutes in an ultrasonication bath, then ultrasound treated in acetone for 10 min and finally rinsed with distilled water. Working electrodes were pieces of clean Ni mesh.

The electrodeposition bath compositions were the following:
For NiFeMo: 2M NH₄Cl; 0.1M NiCl₂; 1*10⁻⁴ M of (NH₄)₆Mo₇O₂₄·4 H₂O and 7*10⁻⁵M of FeCl₂;
For NiMoCo: 2M NH₄Cl; 0.1M NiCl₂; 1*10⁻⁴ M of (NH₄)₆Mo₇O₂₄·4 H₂O and 0.09M of CoCl₂·6 H₂O

### Cited prior art documents:

[1] Jothi, Vasanth Rajendiran, et al. "Corrosion and alloy engineering in rational design of high current density electrodes for efficient water splitting." Advanced Energy Materials 10.24 (2020) : 1904020.
[2] Krstajić, N. V., et al. "Electrodeposition of Ni-Mo alloy coatings and their characterization as cathodes for hydrogen evolution in sodium hydroxide solution." International Journal of Hydrogen Energy 33.14 (2008): 3676-3687.
[3] Zhao, Meng-Jie, et al. "Indirect electrodeposition of a NiMo@ Ni (OH) 2MoOx composite catalyst for superior hydrogen production in acidic and alkaline electrolytes." Renewable Energy 191 (2022): 370-379.

All scientific publications and patent documents cited in the present specification are incorporated by reference herein.

## Claims

1. A method for the synthesis of a transition metal catalyst consisting of electrodeposition on a substrate electrode from an electrolyte solution comprising at least one transition metal precursor, wherein the electrodeposition takes places at a deposition current density of 500 to 2000 mA/cm².

2. The method according to claim 1, wherein electrolytes in the electrolyte solution are chosen, so that the conductivity of the electrolyte solution is at least 1 to 1000 mS/cm, particularly wherein electrolytes in the electrolyte solution are chosen so that the conductivity of the electrolyte solution is at least 100 to 700 mS/cm, more particularly wherein electrolytes in the electrolyte solution are chosen so that the conductivity of the electrolyte solution is at least 100 to 400 mS/cm.

3. The method according to any of the preceding claims, wherein the electrolyte solution comprises further electrolytes, wherein at least one is selected from the group consisting of K⁺, Na⁺, NH₄²⁺, SOa²⁻, NO₃⁻, CO₃²⁻, NH₄⁺ and Cl⁻, in particular wherein at least one is selected from the group consisting of NH₄⁺ and Cl⁻.The method according to claim 1, wherein the transition metal of the at least one transition metal precursor is selected from nickel, molybdenum, cobalt, and iron , wherein in case of the transition metal of one of the at least one transition metal precursor being molybdenum at least one other transition metal precursor is used.

4. The method according to claim 3, wherein two or more transition metal precursor are used, which are selected from a nickel precursor, a molybdenum precursor, a cobalt precursor, and an iron precursor, particularly one of the two or more transition metal precursor is a nickel precursor.

5. The method according to claims 3 and 4, wherein a molybdenum precursor and a nickel precursor are used as transition metal precursors.

6. The method according to claims 3 to 5, wherein the at least one transition metal precursor are selected from transition metal oxides, transition metal sulphates, transition metal halogens and transition metal nitrates.

7. The method according to claims 3 to 6, wherein the molybdenum precursor is selected from a molybdenum oxide.

8. The method according to claim 3 to 7, wherein the molybdenum precursor is selected from the group consisting of (NH₄)₆Mo₇O₂₄, Na₂MoO₄ and K₂MoO₄, particularly wherein the molybdenum precursor is (NH₄)₆Mo₇O₂₄.

9. The method according to claims 3, 4 and 6, wherein the nickel precursor, the iron precursor and/or the cobalt precursor are independently from each other selected from MClₓ, M(NO₃)ₓ and MSO₄, particularly MClₓ, wherein M is selected from iron, cobalt and nickel and x corresponds to the oxidation state of the corresponding metal.

10. The method according to claims 3 to 9, wherein the molar ratio of the nickel precursor to any transition metal precursor other than a cobalt precursor is 1:2000 to 1:350, particularly 1:2000 to 1:500, more particularly 1:2000 to 1:1000, wherein in case a cobalt precursor is used, the molar ratio of the nickel precursor to the cobalt precursor is 1:1 to 1:1.5.

11. The method according to any of the preceding claims, wherein the substrate electrode is selected from nickel mesh, iron mesh, copper mesh, stainless steel mesh, titanium mesh, aluminium mesh, titanium paper, stainless steel paper, nickel paper, iron paper, carbon paper, aluminium foam, cobalt foam, graphene foam, nickel foam, carbon foam, iron foam, and titanium foam, particularly wherein the substrate electrode is selected from nickel mesh, nickel foam, nickel paper, stainless steel paper and carbon paper, more particularly the substrate electrode is selected from carbon paper, nickel paper and stainless steel paper and nickel foam.

12. The method according to any of the preceding claims, wherein the deposition current density is between 800 and 1700 mA/cm², particularly wherein the deposition current density is between 1000 and 1600 mA/cm², more particularly the deposition current density is between 1300 and 1500 mA/cm².

13. A transition metal catalyst obtained by the method according to claims 1 to 12, wherein the transition metal catalyst is **characterised in that** it is stable for at least 30 minutes at a current density of at least 400 A/cm² on the substrate electrode, particularly wherein the transition metal catalyst is **characterised in that** it is stable for at least 30 minutes at a current density of 1000 mA/cm² on the substrate electrode.
